# EUROPÄISCHE PATENTSCHRIFT

(11) **EP 0 553 320 B1**
(45) Veröffentlichungstag und Bekanntmachung des Hinweises auf die Patenterteilung: **12.06.1996**
(21) Anmeldenummer: 92916024.0
(22) Anmeldetag: 04.07.1992
(51) Int. Cl.: B03C 7/00, B03C 7/12, B29B 17/02

(54) **VERFAHREN ZUR TRENNUNG VON POLYETHYLEN (PE) UND POLYPROPYLEN (PP)**
METHOD OF SEPARATING POLYETHYLENE (PE) AND POLYPROPYLENE (PP)
PROCEDE POUR LA SEPARATION DU POLYETHYLENE (PE) ET DU POLYPROPYLENE (PP)

(30) Priorität: 21.08.1991 DE 4127574
(43) Veröffentlichungstag der Anmeldung: 04.08.1993
(73) Patentinhaber: KALI UND SALZ BETEILIGUNGS AKTIENGESELLSCHAFT, D-34111 Kassel (DE)
(72) Erfinder: STAHL, Ingo, D-3502 Vellmar (DE); HOLLSTEIN, Axel, D-3500 Kassel (DE); KLEINE-KLEFFMANN, Ulrich, D-6430 Bad Hersfeld (DE); GEISLER, Iring, D-6430 Bad Hersfeld (DE); NEITZEL, Ulrich, D-3500 Kassel (DE)
(86) Internationale Anmeldenummer: EP9201614
(87) Internationale Veröffentlichungsnummer: WO9303852

(56) Entgegenhaltungen:
- DE-A- 1 758 756
- DE-A- 3 035 649
- DE-A- 3 227 874
- FR-A- 1 505 274

## Beschreibung

Die Erfindung betrifft ein Verfahren zur Trennung von Kunststoffteilchen eines Kunststoffgemenges von Kunststoffen chemisch unterschiedlicher Art, die jedoch einen annähernd gleichen Dichtebereich aufweisen, z.B. Polyethylen (PE) und Polypropylen (PP), durch ein elektrostatisches Trennverfahren mittels eines Freifallscheiders.

Die Polyolefine Polyethylen (PE) und Polypropylen (PP) gehören zu den am meisten verwendeten Massenkunststoffen. Sie stellen daher auch den überwiegenden Anteil der am Abfall enthaltenden Kunststoffe dar. Die Dichte von PE liegt zwischen 0,92 und 0,97 g/cm³, die von PP zwischen 0,9 und 0,91 g/cm³.

Viele Gebrauchs- und Einwegartikel bestehen aus diesen Kunststoffen. Ein Beispiel hierfür sind die medizinischen Einwegspritzen. Einwegspritzen bestehen aus einem Zylinder aus Polypropylen und einem Stempel aus Polyethylen. Sie werden nach Entfernen der Injektionsnadel in den Abfall gegeben und bislang überwiegend durch Verbrennen entsorgt. Auf dem Abfallsektor geht der Trend heute zur Wiederverwertung. In vielen Krankenhäusern gibt es bereits Pilotprojekte, um Kunststoffgegenstände zu sammeln und zu rezyklieren. Die Kunststoffmenge einer Spritze besteht etwa zu gleichen Teilen aus den Kunststoffen PE und PP. Für solche Gemenge gibt es keine entsprechende Nachfrage, so daß dafür nur geringe oder gar keine Erlöse erzielt werden können. Es gibt sogar Verwerter, die für die Abnahme eine Gutschrift verlangen.

Für sortenreine Rezyklate lassen sich dagegen Erlöse erzielen, die sich am Neuwarenpreis ausrichten und bis zu 60 % des Neuwarenpreises ausmachen können. Infolgedessen ist es wirtschaftlich interessant, derartige Gemische trennen zu können.

Nach dem Stand der Technik gibt es folgende Möglichkeiten zur Trennung derartiger Kunststoffgemische:
1. Handklaubung
   Diese Methode wird im Bereich des Rezyklierens mangels besserer Methoden wieder im großen Umfang angewandt, obwohl sie sehr lohnintensiv und daher auch unwirtschaftlich ist.
2. Auch die Sortierung nach der Dichte stellt sich als ein nicht sehr erfolgreiches Verfahren dar, da PP und PE ähnliche Dichten haben und die Trennung mittels eines Wasser-Alkohol-Gemisches der Dichte von 0,91 keine praktische Anwendung gefunden hat. Hieraus ergibt sich bereits, daß eine Dichtetrennung mit Wasser aufgrund des nahezu gleichen Dichtebereichs der beiden Stoffe nicht möglich ist.

In der DE-PS 30 35 649 wird die Trennung von Kunststoffgemengen in einem Freifallscheider beschrieben; das bekannte Verfahren ist jedoch nicht zur Trennung der oben genannten Kunststoffgemenge einsetzbar, da bei der triboelektrischen Aufladung des Kunststoffgemenges die unterschiedlichen Kunststoffe PE und PP nicht selektiv geladen werden.

Die Folge hiervon ist, daß nach Durchlaufen des Freifallscheiders eine erhebliche Menge an Mittelgut anfällt, d. h., die Kunststoffteilchen weisen überwiegend eine geringe Aufladung auf, die zu einer Auslenkung im Feld nicht ausreicht. Häufig ist die Aufladung ganz unselektiv.

Nach FR-1.505.274 ist ein Verfahren zur elektrostatischen Aufbereitung von Mineralgemischen bekannt, bei dem das Aufbereitungsgut mit anorganischen Säuren oder Basen behandelt wird. Dabei wird das Hilfsreagenz vor, während oder nach der Konditionierungsmittelzugabe auf das zu trennende Mineralgemisch aufgebracht und mit dem Gut vermischt. Anschließend wird das Mineralgemisch mit dem Hilfsreagenz erwärmt und getrennt. Dieses Verfahren ist insbesondere für die Trennung von Salzen geeignet.

Der Erfindung liegt die Aufgabe zugrunde, ein Verfahren der eingangs genannten Art derart weiterzubilden, daß insbesondere bei der Trennung von PE und PP ein hoher Reinheitsgrad der jeweiligen Kunststoffart erreicht wird, und wobei die entstehende Menge an Mittelgut möglichst gering gehalten wird.

Die Aufgabe wird erfindungsgemäß dadurch gelöst, daß vor der triboelektrischen Aufladung das Kunststoffgemenge einer Oberflächenbehandlung unterworfen wird. Die Oberflächenbehandlung des Kunststoffgemenges umfaßt nach einer Ausführungsform eine Behandlung mit Mineralsäure, nach einer anderen Ausführungsform wird das Kunststoffgemenge mit einer Alkalilauge in Berührung gebracht. Als Mineralsäure kommt hierbei insbesondere verdünnte Salzsäure in Betracht, wobei die Verdünnung der Salzsäure so gewählt wird, daß sich ein pH-Wert von ca. 3 einstellt.

Als Alkalilauge wird vorzugsweise verdünnte Natronlauge verwendet, wobei die Verdünnung der Natronlauge derart eingestellt wird, daß sich eine Lauge mit einem pH-Wert von ca. 10 - 12 ergibt.

Es hat sich in Versuchen gezeigt, daß durch eine Oberflächenbehandlung mit den entsprechenden Stoffen gute Trennergebnisse im Freifallscheider erzielt werden konnten, was sich insbesondere in einem hohen Reinheitsgrad der Fraktionen, aber auch in einer relativ geringen Menge an Mittelgut zeigt.

Erklärbar erscheint dies dadurch, daß durch die Mineralsäure bzw. die Alkalilauge die Oberfläche des Kunststoffes derart verändert wird, daß eine bessere triboelektrische Aufladung möglich ist.

Vor der eigentlichen Oberflächenbehandlung wird das Kunststoffgemenge, das vorteilhaft auf eine Teilchengröße von unter 10 mm, vorzugsweise von unter 6 mm, zerkleinert wird, von Fremdstoffen, wie z.B. Papier, durch Wasser gereinigt. Hierbei kann nach einem besonderen Merkmal der Erfindung wahrend des ReinigungsvorgangeS die Mineralsäure bzw. die Alkalilauge dem Reinigungswasser zugegeben werden, wobei jedoch der Grad der Verdünnung, der durch die Einstellung des entsprechenden pH-Wertes gekennzeichnet ist, einzuhalten ist.

Nach der Reinigung, gegebenenfalls unter Zusatz der Alkalilauge bzw. der Mineralsäure und nach gegebenenfalls einem Waschen des Kunststoffgemenges mit klarem Wasser wird der Wasseranteil des Gemenges durch Entwässerungsaggregate, wie z.B. Zentrifuge, auf wenigstens ca. 2 % gesenkt.

Hiernach erfolgt eine Temperaturbehandlung des Kunststoffgemenges bei 70 - 100°C über einen Zeitraum von mindestens 5 min.

Diese Temperaturbehandlung dient zusätzlich noch der Veränderung der Oberfläche im Hinblick auf eine bessere triboelektrische Aufladung der einzelnen Kunststoffteilchen.

Nach dieser Temperaturbehandlung wird nach einem weiteren vorteilhaften Merkmal der Erfindung dem Kunststoffgemenge etwa 10 - 50 mg Fettsäure pro kg Gemenge zugegeben.
Es hat sich gezeigt, daß es aufgrund dieser Vorbehandlung und hier insbesondere aufgrund der Vorbehandlung mit der Säure bzw. Lauge ausreicht, wenn im Freifallscheider Feldstärken von lediglich 2 - 3 KV/cm aufrechterhalten werden, um die Abscheidung der Kunststoffteilchen an den entsprechenden Elektroden zu verursachen. Bei einer derart vergleichsweisen geringen Feldstärke werden Sprühentladungen vermieden, wie sie bei höheren Feldstärken auftreten können, mit der Folge, daß eine mögliche Entzündung der Kunststoffteilchen bzw. eine eventuelle Staubexplosion vermieden wird.

Die triboelektrische Aufladung des Gemenges erfolgt nach der Temperaturbehandlung bei einer Temperatur von 15 - 50°C, vorzugsweise von 20 - 35°C, und einer relativen Feuchte der umgebenden Luft von ca. 10 - 40 %, vorzugsweise von 15 - 20 %. Die Aufladung selbst kann in einem Fließbetttrockner oder in einer Spiralschnecke ausreichender Länge erfolgen; gleichfalls möglich ist die Aufladung durch pneumatische Förderung des Gemisches über eine bestimmte Länge.

Das erfindungsgemäße Verfahren wird nachstehend an zwei Beispielen beschrieben.

### Beispiel 1

Gebrauchte Spritzen aus einem Krankenhaus wurden auf einer Schneidmühle aufgemahlen. Das Schnitzelgemisch wies einen PP-Gehalt von 51,1 % und einen PE-Gehalt von 49,9 % auf. Das Schnitzelgemisch wurde gewaschen, geschleudert und 6 min bei 80°C in einem Fließbetttrockner getrocknet und nach dem Abkühlen noch 3 min bei 25°C und 21 % relativer Feuchte im Fließbett aufgeladen; jedoch wurde vor der Aufladung im Fließbett noch 50 mg Fettsäsure/kg zugegeben.

Folgende Trennergebnisse wurden erhalten:

| | | | Analyse (Reinheitsgrad) | | | | | | Ausbeute (Menge) | | | | | |
|---|---|---|---|---|---|---|---|---|---|---|---|---|---|---|
| Eff.Mengen (%) | | | % PE | | | % PP | | | PE (%) | | | PP (%) | | |
| P | M | N | P | M | N | P | M | N | P | M | N | P | M | N |
| 46,4 | 7,2 | 46,4 | 96,9 | 55,2 | 3,9 | 3,1 | 47,5 | 92,1 | 89,0 | 7,4 | 3,6 | 2,9 | 6,9 | 90,2 |

zur Erläuterung:
P = positive Elektrode
N = negative Elektrode
M = Mittelgut
Mit dem gebrauchten Spritzen-Kunststoff-Schnitzelgemisch wurde ein ausgezeichnetes Ergebnis nach Waschen, Trocknen bei hoher Temperatur, Konditionieren mit Fettsäure und Aufladen bei leicht erhöhter Zimmertemperatur erhalten.

### Beispiel 2

Ein trockenes PP/PE-Schnitzelgemisch aus aufgemahlenen Flaschen wies einen PP-Gehalt von ca. 57 % und einen PE-Gehalt von ca. 43 % auf. Das Gemisch wurde zunächst mit 4 %iger Natronlauge und dann mit Wasser gewaschen, geschleudert und 20 Stunden an der Luft getrocknet.

Das Gemisch wurde 3 min in einem Fließbett bei 25°C und 11 % relativer Feuchte aufgeladen und auf einem Freifallscheider getrennt.

Folgende Trennergebnisse wurden erhalten:

| | | | Analyse (Reinheitsgrad) | | | | | | Ausbeute (Menge) | | | | | |
|---|---|---|---|---|---|---|---|---|---|---|---|---|---|---|
| Eff.Mengen (%) | | | % PE | | | % PP | | | PE (%) | | | PP (%) | | |
| P | M | N | P | M | N | P | M | N | P | M | N | P | M | N |
| 41,1 | 15,8 | 43,1 | 88,2 | 26,7 | 6,8 | 11,8 | 73,3 | 93,2 | 83,5 | 9,7 | 6,8 | 8,6 | 20,4 | 71,0 |

Es zeigte sich, daß Waschen mit verdünnter Natronlauge zu einem brauchbaren Trennergebnis führt.

### Beispiel 3

Gebrauchte Spritzen aus einem Krankenhaus wurden auf einer Schneidmühle aufgemahlen und nach unterschiedlicher Trocknung auf einem Freifallscheider aufgetrennt. Das Schnitzelgemisch wies einen PP-Gehalt von
57,6% und einen PE-Gehalt von 42,4 % auf.
a) Das Schnitzelgemisch wurde 5 min im Fließbett auf 80°C erwärmt, danach auf 30°C abgekühlt und danach noch 3 min in einem Fließbett bei 30°C aufgeladen.
b) Das gleiche Gemisch wurde 5 min im Fließbett bei 30°C aufgeladen.
c) Das gleiche Gemisch wurde 5 min im Fließbett bei 80°C aufgeladen.

Folgende Trennergebnisse wurden erhalten:

| | | | | Analyse (Reinheitsgrad) | | | | | | Ausbeute (Menge) | | | | | |
|---|---|---|---|---|---|---|---|---|---|---|---|---|---|---|---|
| Eff.Mengen (%) | | | | % PE | | | % PP | | | PE (%) | | | PP (%) | | |
| | P | M | N | P | M | N | P | M | N | P | M | N | P | M | N |
| a) | 36,5 | 28,5 | 35,0 | 83,2 | 40,9 | 14,3 | 16,8 | 59,1 | 85,7 | 64,6 | 24,8 | 10,6 | 11,6 | 31,8 | 56,6 |
| b) | 29,1 | 63,6 | 7,3 | 40,8 | 44,7 | 40,8 | 59,2 | 55,3 | 59,2 | 27,4 | 65,7 | 6,9 | 30,3 | 62,0 | 7,6 |
| c) | 50,9 | 19,9 | 26,2 | 42,5 | 51,1 | 46,5 | 57,5 | 48,9 | 53,5 | 47,7 | 22,4 | 29,9 | 53,6 | 17,8 | 28,6 |

Danach ist es vorteilhaft, das Schnitzelgemisch zunächst bei einer vergleichsweisen hohen Temperatur zu trocknen und bei mäßiger Temperatur aufzuladen.

## Patentansprüche

1. Verfahren zur Trennung von Kunststoffteilchen eines Kunststoffgemenges von Kunststoffen chemisch unterschiedlicher Art, die jedoch einen annähernd gleichen Dichtebereich aufweisen, z. B. Polyethylen (PE) und Polypropylen (PP) durch ein elektrostatisches Trennverfahren, wobei das Kunststoffgemenge vor der Sortierung mittels eines Freifallscheiders triboelektrisch aufgeladen wird, dadurch gekennzeichnet, daß das Kunststoffgemenge vor der triboelektrischen Aufladung derart oberflächenbehandelt wird, daß es intensiv mit einer Mineralsäure oder einer Alkalilauge in Berührung gebracht und anschließend mit Wasser gewaschen und getrocknet wird.

2. Verfahren nach Anspruch 1, dadurch gekennzeichnet, daß als Mineralsäure verdünnte Salzsäure verwendet wird.

3. Verfahren nach Anspruch 2, dadurch gekennzeichnet, daß die Verdünnung der Salzsäure so gewählt wird, daß sich ein pH-Wert von ca. 3 einstellt.

4. Verfahren nach Anspruch 1, dadurch gekennzeichnet, daß als Alkalilauge verdünnte Natronlauge verwendet wird.

5. Verfahren nach Anspruch 4, dadurch gekennzeichnet, daß die Verdünnung der Natronlauge so gewählt wird, daß sich ein pH-Wert von ca. 11 - 12 einstellt.

6. Verfahren nach Anspruch 1, dadurch gekennzeichnet, daß das auf etwa 2 % getrocknete Gut unmittelbar vor der triboelektrischen Aufladung einer gesonderten Temperaturbehandlung bei 70 - 100°C über einen Zeitraum von mindestens 5 min unterworfen wird und anschließend dem Gemenge 10 - 50 mg Fettsäure pro kg Gemenge zugegeben werden.

7. Verfahren nach Anspruch 1 und 6, dadurch gekennzeichnet, daß die triboelektrische Aufladung nach einer Abkühlung des behandelten Gutes auf 15°C bis 50°C, vorzugsweise 20 - 25°C erfolgt.

8. Verfahren nach Anspruch 1, dadurch gekennzeichnet, daß der Freifallscheider bei Feldstärken von 2 - 3 kV/cm arbeitet.

9. Verfahren nach Anspruch 1, 2 und 3 oder 4 und 5, dadurch gekennzeichnet, daß die Mineralsäure bzw. Alkalilauge dem Reinigungswasser zugegeben wird.

10. Verfahren nach Anspruch 1, dadurch gekennzeichnet, daß das Gut vor der Trennung in ein Fließbett eingebracht, durch eine Förderschnecke ausreichender Länge geschickt oder pneumatisch über eine bestimmte Strecke befördert wird.

## Claims

1. A method of separating plastics particles of a mixture of plastics of chemically different ends which however have an approximately identical density range, for example polyethylene (PE) and polypropylene (PP) by an electrostatic separation procedure, wherein the mature of plastics is triboelectrically charged prior to the sorting operation by bans of a free-fall separator, characterised in that prior to the triboelectric charging operation the mixture of plastics is surface-treated in such a way that it is brought intensively into contact with a mineral acid or an alkali lye and then washed with water and dried.

2. A method according to claim 1 characterised in that the mineral acid used is dilute hydrochloric acid.

3. A method according to claim 2 characterised in that the dilution of the hydrochloric acid is so selected that the pH-value is about 3.

4. A method according to claim 1 characterised in that dilute soda lye is used as the alkali lye.

5. A method according to claim 4 characterised in that the dilution of the soda lye is so selected that the pH-value is about 11 - 12.

6. A method according to claim 1 characterised in that the material which is dried to about 2%, immediately prior to the triboelectric charging operation, is subjected to a separate temperature treatment at 70 - 100°C over a period of at least 5 minutes and then 10 - 50 mg of fatty acid per kg of mature is added to the mature.

7. A method according to claim 1 and claim 6 characterised in that the triboelectric charging operation is effected after cooling of the treated material to 15°C to 50°C, preferably 20 - 25°C.

8. A method according to claim 1 characterised in that the free-fall separator operates at field strengths of 2 - 3 kV/cm.

9. A method according to claim 1, claim 2 and claim 3 or claim 4 and claim 5 charaterised in that the mineral acid or alkali lye is added to the cleaning water.

10. A method according to claim 1 characterised in that prior to the separation operation the material is introduced into a fluid bed, passed through a conveyor screw of adequate length or conveyed pneumatically over a given distance.

## Revendications

1. Procédé de séparation de particules d'un mélange de matières plastiques de nature chimique différente, qui ont cependant à peu près le même domaine de densité, par exemple de polyéthylène (PE) et de polypropylène (PP), par un procédé de séparation par voie électrostatique, le mélange de matières plastiques étant chargé triboélectriquement au moyen d'un séparateur à chute libre avant le triage, caractérisé en ce qu'il consiste à traiter superficiellement le mélange de matières plastiques avant de le charger triboélectriquement en le mettant en contact intense avec un acide minéral ou une lessive alcaline et ensuite, en le lavant à l'eau et en le séchant.

2. Procédé suivant la revendication 1, caractérisé en ce qu'il consiste à utiliser, comme acide minéral, de l'acide chlorhydrique dilué.

3. Procédé suivant la revendication 2, caractérisé en ce qu'il consiste à choisir la dilution de l'acide chlorhydrique de manière à obtenir un pH de 3 environ.

4. Procédé suivant la revendication 1, caractérisé en ce qu'il consiste à utiliser de la lessive de soude diluée comme lessive alcaline.

5. Procédé suivant la revendication 4, caractérisé en ce qu'il consiste à choisir la dilution de la lessive de soude de manière à obtenir un pH de 11 à 12 environ.

6. Procédé suivant la revendication 1, caractérisé en ce qu'il consiste à soumettre le produit séché à 2 % environ, juste avant de le charger par voie triboélectrique, à un traitement en température séparée entre 70 et 100°C pendant une durée d'au moins 5 minutes et ensuite à ajouter au mélange de 10 à 50 mg d'acide gras par kg du mélange.

7. Procédé suivant la revendication 1 ou 6, caractérisé en ce qu'il consiste à effectuer la charge par voie triboélectrique après un refroidissement du produit traité entre 15°C et 50°C, de préférence entre 20 et 25°C.

8. Procédé suivant la revendication 1, caractérisé en ce qu'il consiste à faire fonctionner le séparateur en chute libre à des intensités de champ de 2 à 3 kV/cm.

9. Procédé suivant la revendication 1, 2, 3 ou 4 et 5, caractérisé en ce qu'il consiste à ajouter l'acide minéral ou la lessive alcaline à de l'eau de nettoyage.

10. Procédé suivant la revendication 1, caractérisé en ce qu'il consiste à mettre avant la séparation le produit dans un lit fluidisé, à l'envoyer dans une vis convoyeuse de longueur suffisante ou à le transporter pneumatiquement sur une certaine étendue.
